# EUROPÄISCHE PATENTANMELDUNG

(11) **EP 2 030 952 A1**
(43) Veröffentlichungstag der Anmeldung: **04.03.2009**
(21) Anmeldenummer: 07747903.8
(22) Anmeldetag: 18.04.2007
(51) Int. Cl.: C02F 3/02, C02F 11/02

(54) **VERFAHREN ZUR BIOLOGISCHEN BEHANDLUNG VON ABWÄSSERN UND ZUR REZYKLIERUNG VON SCHLAMM**

(30) Priorität: 22.05.2006 RU 2006117592
(71) Anmelder: Stepkin, Andrey Andreevich, Volgograd 400075 (RU); Stepkina, Uliya Andreevna, Volgograd 400075 (RU)
(72) Erfinder: Stepkin, Andrey Andreevich, Volgograd 400075 (RU); Stepkina, Uliya Andreevna, Volgograd 400075 (RU)
(74) Vertreter: Jeck, Anton
(86) Internationale Anmeldenummer: PCT/RU2007/000193
(87) Internationale Veröffentlichungsnummer: WO 2007/136296

(57) **Zusammenfassung**

Die Erfindung betrifft ein Verfahren zur biologischen Abwasserklärung und Schlammverwertung, das eine Sorption und Oxidation des Abwassers in Biozönose des Belebtschlammes, eine Abwasserbelüftung und -behandlung mittels Kavitationsverfahrens, eine Abscheidung von gereinigtem Wasser, ein Auffangen von angeschwollenem Schlamm, eine Wassernachreinigung mittels Ausflockung, eine Rückführung von angeschwommenen Schlamm zur primären Belüftungsphase und eine Entnahme und Entfernung des abgenutzten Niederschlags aufweist. Der Reinigungsgrad und der Unschädlichkeitsgrad der abgeschiedenen Verunreinigungen wird dadurch erhöht, dass die Sorption und Oxidation bei einem Luftsauerstoffsättigungsgrad von mindestens 18 - 22 mg/l durchgeführt werden, dass dieser Vorgang vorwiegend in drei Belüftungsbecken mit eingesetzter Biozönose mindestens zweimal in Auf- und Abströmung mit erzeugter Verwirbelung vorgenommen wird, das auch die Nachreinigung, die Abscheidung und das Auffangen des angeschwommenen Schlammes in zwei bis drei Schritten durchgeführt wird, dass der Schlamm und die Schlammteilchen in zwei Teile aufgeteilt werden, die unterschiedlich in zwei Zyklen behandelt werden, dass während der Zeitdauer dieser Vorgänge die Abwasserzuführung in die Belüftungsbecken gesperrt und eine mehrfache zirkulationsgestützte Belüftungs- und Kavitationsbehandlung vorgenommen werden und dass im Absetzvorgang der Schlamm verdichtet und das enzymangereicherte Faulraumwasser in die Primärstufe des Wasserklärungsvorgangs zurückgeführt werden.

## Beschreibung

Die Erfindung betrifft ein Verfahren zur biologischen Abwasserklärung und Schlammverwertung nach dem Oberbegriff des Anspruchs 1.

Es ist ein Verfahren zur biologischen Abwasserklärung bekannt, welches folgende Schritte einschließt:
- eine Abwasserklärung mittels Biozönose in den Belebtschlammanlagen,
- eine Wassernachreinigung und
- eine Abscheidung von angeschwollenem Schlamm und schwebenden Feststoffen,
- eine Regenerierung von angeschwollenem Schlamm während des biologischen Klärungsvorgangs (sie erfolgt auf der Tragfläche, welche im Abscheider liegt und bei einer Wasserbegasung in Zirkulationsräumen verschleimt. Die Zirkulationsräume befinden sich dabei zwischen den Schichten der Verschleimung),
- einer Rückführung des regenerierten Schlamms in die Belüftungsbecken und
- einer Schlammausräumung (Patent der RF Nr. 2180895 C 02 F3/06, veröff. am 27.03.2002).

Dieses Verfahren stellt den erforderlichen Reinigungsgrad bei schwer oxydierbaren Verschmutzungen nicht sicher. Außerdem setzt es die Einhaltung von einem komplizierten hydrodynamischen Verhalten voraus, um die Leistungsfähigkeit des Belebtschlammes in den Zirkulationsräumen aufrechtzuerhalten. Außerdem bedarf der erzeugte Niederschlag einer zusätzlichen Behandlung für seine Entgiftung.

Der nächste Stand der Technik in Bezug auf das erzielte technische Ergebnis und auf das wesentliche Merkmal ist ein Verfahren zur biologischen Abwasserklärung (Patent der RF Nr. 2255905, C 02 F 3/00, veröff. 10.07.2005). Dieses Verfahren umfasst:
- eine Abwassersorption und -Oxidation in Biozönose des Belebtschlammes unter Abwasserbegasung;
- eine Kavitationsbehandlung mit geringer Intensität,
- eine Reinwasserabscheidung,
- eine Retention von angeschwollenem Schlamm und
- eine Wassernachreinigung mittels Ausflockung anhand von Verschleimung und Schwerkraftabscheidung, welche in einem Abscheider erfolgen,
- eine Rückführung von angeschwollenem Schlamm in den Sammelbehälter zur Belüftung und
- eine Schlammausräumung.

Dabei erfolgt die Belüftung mindestens zweimal: einmal als Vorbelüftung und nachher während der Reinigung mit einem Luftsauerstoffsättigungsgrad von mindestens 15 - 20 mg/l.

Dieses Verfahren ermöglicht es, die gesamte verwendete Ausrüstung zu vereinfachen, weil für solche Abläufe wie die Sorption und die Oxidation eine Zuführungsleitung eingesetzt wird.

Allerdings setzt die Abwasserklärung bis zu einem solchem Verschmutzungsgrad, welcher die Abführung von Abwässern in die natürlichen Gewässer zulässig macht, eine ziemlich große Rohrleitungsausdehnung voraus. Das ist jedoch nicht immer machbar. Außerdem können die abgeschiedenen Verunreinigungen nicht gut genug unschädlich gemacht werden und bedürfen einer weiteren Behandlung um nachfolgend verwertet werden zu können.

Das Verfahren ist bei dem Vorhandensein von schwer oxydierbaren Verschmutzungen nicht wirksam genug.

Es ist Aufgabe der Erfindung, den Reinigungsgrad und den Unschädlichkeitsgrad der abgeschiedenen Verunreinigungen zu erhöhen, so dass der abgeschiedene Schlamm als Nutzprodukt eingesetzt werden kann. Die weitere Aufgabe ist die Kostensenkung bei der Abwasserklärung und der Schlammverwertung.

Die gestellte Aufgabe wird durch die Merkmale des Anspruchs 1 gelöst.

Das Ergebnis der vorgeschlagenen technischen Lösung ist die Erhöhung des Wasserreinigungsgrades, die Kostensenkung im Zusammenhang mit der Reinigung und die Steigerung des Unschädlichkeitsgrades der aufgefangenen Verschmutzungen, so dass der verwertete Schlamm als organomineralisches Produkt für unterschiedliche wirtschaftliche Anwendungen wie Bodenmelioration und Mehrung der Bodenfruchtbarkeit eingesetzt werden kann.

Das genannte technische Ergebnis wird folgenderweise erreicht. Das bekannte Verfahren zur biologischen Abwasserklärung und Schlammverwertung umfasst folgende Ablaufsschritte:
- eine Sorption und Oxidation von Abwasser in Biozönose des Belebtschlammes,
- eine Abwasserbelüftung und -behandlung mittels Kavitationsverfahrens mit niedrigem Intensitätsgrad,
- eine Abscheidung von gereinigtem Wasser,
- ein Auffangen von angeschwollenem Schlamm
- eine Wassernachreinigung mittels Ausflockung anhand von Verschleimung und Schwerkraftabscheidung,
- eine Rückführung von angeschwollenem Schlamm zur primären Belüftungsphase und
- eine Entnahme und Entfernung des abgenutzten Niederschlages.

Dabei wird die Abwasserbelüftung mindestens zweimal vorgenommen. Die erste Belüftung erfolgt, bis der Luftsauerstoffsättigungsgrad von mindestens 15 - 20 mg/l erreicht ist. Später können weitere Belüftungen vorgenommen werden. Das Auffangen von dem angeschwollenen Schlamm und der Verschleimung erfolgt in einem Abscheider mit festgelegter Beladung, welche die Verschleimung aufweist. Dieses bekannte Verfahren zeichnet sich durch folgende Merkmale aus:

Die Sorption und die Oxidation von Abwässern in der Biozönose des Belebtschlammes werden mit dem Sorptions- und Oxidationsvorgang anhand der Verschleimung bei einem Luftsauerstoffsättigungsgrad von mindestens 18 - 22 mg/l kombiniert.

Dieser Vorgang wird konsequent in drei Phasen durchgeführt. Alle Phasen erfolgen in getrennten Belüftungsbecken.

Die Selüftungsbecken unterscheiden sich voneinander durch die eingesetzte Biozönose des Belebtschlammes und der Verschleimung. Dabei wird die Vermischung des Belebtschlammes mit dem zu klärenden Abwasser in jedem Belüftungsbecken mindestens zweimal in der Auf- und Abströmung vorgenommen. Die Auf- und Abströmung wird im Belüftungsbecken mittels einer Verwirbelung des Wasser-Luftgemisches erzeugt. Das Wasser-Luftgemisch entsteht bei der Behandlung nach dem Kavitationsverfahren mit niedrigem Intensitätsgrad und bei der Belüftung, welche in jeder Ablaufsphase vorgenommen wird.

Die Nachreinigung, die Abscheidung von gereinigtem Wasser und das Auffangen von angeschwollenem Schlamm und Schleimteilchen erfolgt konsequent in zwei bis drei Schritten. Der aufgefangene Niederschlag besteht aus dem angeschwollenen Schlamm und den Schleimteilchen. Der Niederschlag wird aufgeteilt. Jeder der Teile wird in eines der Belüftungsbecken gefördert, wo vorher die Wasserreinigung durchgeführt wurde. Ein Teil wird für die Regenerierung des Schlammes verwendet. Der Rest wird für die Behandlung des Schlammes eingesetzt.

Bei der Behandlung von dem zu verwertenden Niederschlag wird seine Verwertung mit der Behandlung nach dem Kavitationsverfahren mit hohem und mit niedrigem Intensitätsgrad in mindestens zwei Zyklen vorgenommen.

Die Abwasserzuführung in jedes der Belüftungsbecken, welche zur Regeneration von angeschwollenem Schlamm oder zur Niederschlagbehandlung eingesetzt werden, wird für eine für solche Vorgänge erforderliche Zeitdauer gesperrt.

Während dieser Vorgänge wird eine mehrfache zirkulationsgestützte Belüftungs- und Kavitationsbehandlung vorgenommen.

Danach wird der Schlamm im Absetzvorgang verdichtet. Das im Niederschlagbehandlungsvorgang enzymangereicherte Faulraumwasser (Überschlammwasser) wird in die Primärstufe des Wasserklärungsvorgangs zurückgeführt.

Die Erhöhung des Wasserreinigungsgrades wird dadurch erreicht, dass der Sorptions- und Oxidationsvorgang des Abwassers in der Biozönose des Belebtschlammes mit dem Sorptions- und Oxidationsvorgang anhand der Verschleimung vereinigt wird, Diese Abläufe erfolgen konsequent in drei Stufen, welche sich durch die in jeweiliger Stufe eingesetzte Biozönose unterscheiden. Jede der Biozönosen unterscheidet sich von der vorher eingesetzten dadurch, dass sie jeweils eine breitere Zusammensetzung der Arten von Mikroorganismen aufweist. Diese Mikroorganismen verfügen über die Fähigkeit, schwer oxydierbare Verunreinigungen zu verarbeiten. Dies setzt voraus, dass während der Reinigung kein Sauerstoffmangel vorliegt. Deswegen wird die Sauerstoffkonzentration im Wasser-Schlammgemisch von ca. 18 - 22 mg/l gehalten. Das ermöglicht es, den Artenbestand des Belebtschlammes und der Verschleimung wesentlich zu erweitern und die Biozönose mit dem für ihre normale Funktion erforderlichen Sauerstoffgehalt zu versorgen.

Dieser Sauerstoffgehalt wird seinerseits während der Sorption und Oxidation dadurch erreicht, dass der Luftsauerstoff in das nach dem Kavitationsverfahren mit niedrigem Intensitätsgrad behandelte Abwasser eingeführt wird. Dabei wird dieses plastische Wasser-Luftgemisch in den unteren Teil des Belüftungsbeckens gefördert. Damit werden die Druckhöhenverluste minimisiert. Es wird auch eine gleichmäßige Sauerstoffkonzentration im Aufstromumfang erreicht.

Das Verfahren wird folgenderweise ausgeführt:

Die groben mechanischen Verunreinigungen werden aus dem Abwasser entfernt. Dieses Abwasser wird dabei in den Sammelbehälter der Pumpenstation geleitet. Danach werden die Abwässer durch die Pumpen zur Vorreinigung gefördert. In der Vorreinigung wird das Wasser nach dem Kavitationsverfahren mit niedrigem Intensitätsgrad behandelt. Das trägt dem Keimwachstum in dem zu reinigenden Wasser bei. Die Grundreinigung erfolgt konsequent in drei Stufen und zwar in drei getrennten Belüftungsbecken. Hier kommen die Sorption und die Oxidation in der Biozönose des Belebtschlammes sowie in der Verschleimung zustande. Dabei wird der biologische Schleim an den Netzträgern befestigt.

Jede der Reinigungsstufen unterscheidet sich durch die jeweilige eingesetzte Biozönose des Belebtschlammes und den biologisch aktiven Schleim, welcher an den Netzträgern befestigt wird.

Während der Behandlung läuft das Wasser durch jedes Belüftungsbecken mindestens zweimal um, je nach Wasserverunreinigungsgrad. Die höchstmögliche Sauerstoffsättigung des Wasser-Schlammgemisches in den Belüftungsbecken wird mittels seiner Versorgung mit dem plastischen Wasser-Luftgemisch während der Rezirkulation in den unteren Teil des Belüftungsbeckens erreicht. Das plastische Wasser-Luftgemisch wird erzeugt, indem das Wasser während seines Umpumpens nach dem Kavitationsverfahren mit niedrigem Intensitätsgrad behandelt wird. Dabei wird dieses Gemisch mit Luftsauerstoff ergänzt.

Die Durchmischung des Belebtschlammes mit dem zu reinigenden Wasser erfolgt konsequent in der Auf- und Abströmung mittels der Verwirbelung dieser Strömung. D.h., die Strömung wird steuerbar im Belüftungsbeckenumfang abgelenkt.

Dabei wird die Wasserbehandlung bei einer Sauerstoffkonzentration im Luft-Schlammgemisch von 18 - 22 mg/l vorgenommen. Im Belüftungsbecken werden solche Bedingungen erzeugt, unter welchen der Wasser-Schlammstrom zuerst den Außenbereich des Belüftungsbeckens (d.h. seinen aufsteigenden Ast) umströmt. Dann fließt er über den Zentralbereich des Belüftungsbeckens (absteigender Ast) herunter und die Verschleimung passiert, welche an den Netzträgern befestigt ist.

Die aufsteigenden Strömungsäste sind mit Sauerstoff mehr angereichert als die absteigenden. Das verschafft die Möglichkeit dafür, dass die Nitrifikations- und Denitrifikationsabläufe nacheinander erfolgen können. Bei diesen Abläufen absorbiert die Biozönose den Sauerstoff zuerst aus dem Wasser-Luftgemisch und dann verbraucht sie ihn, um die Verunreinigungen zu oxydieren. Damit wird der hohe Reinigungsgrad erreicht.

Die in jedem der Belüftungsbecken eingesetzte Biozönose wurde nach dem stufenweisen Ablauf der Entnahme von Verunreinigungen (von den leicht bis zu den schwer oxydierbaren) gebildet. Diese Entnahme erfolgt mittels einer ununterbrochenen Züchtung des jeweiligen Artenbestands der Mikroorganismen im Belüftungsbecken.

In der ersten Stufe der biologischen Reinigung wird die leicht oxydierbare Organik des Belebtschlammes entfernt. Die Biozönose dieses Belebtschlammes wird durch einen relativ geringen Artenbestand gekennzeichnet, der 5 - 7 Gruppen von Mikroorganismen enthält. In der zweiten Stufe der Biozönose im Belüftungsbecken wird der zusätzliche arithmetische Zuwachs von den nächsten 8 - 10 Mikroorganismengruppen zu den bereits bestehenden beobachtet. Beim vorgegebenen Reinigungsbetrieb werden die Mikroorganismen aus den zwei vorherigen Stufen im dritten Belüftungsbecken durch neue Arten der Mikroorganismen und zwar durch 12 - 14 Gruppen davon ergänzt. Somit erfolgt die Entfernung von Verunreinigungen aus dem zu reinigenden Wasser stufenweise. Zuerst werden die leichtoxydierbaren, dann die mitteloxydierbaren und anschließend die schwer oxydierbaren Verunreinigungen entfernt.

Nachdem alle drei Belüftungsbecken passiert sind, kommt die Mischung von Abwasser und angeschwollenem Schlamm in den Abscheider. Hier erfolgen die Abscheidung des Reinwassers und das Auffangen des angeschwollenen Schlamms. Hier kommt auch die Nachreinigung mittels Ausflockung anhand von Verschleimung und Schwerkraftabscheidung zustande. Dabei nimmt der Luftsauerstoffsättigungsgrad des Wasser-Schlammgemisches ab, obwohl er immer noch ziemlich hoch (10 -15 mg/l) bleibt. Damit ist die tiefe Wasserreinigung abgeschlossen. Die eigentliche Abscheidung des Belebtschlammes aus dem zu reinigenden Wasser erfolgt stufenweise in den Abscheidern. In der ersten Stufe werden die schwersten Flocken des Belebtschlammes und in den nächsten Stufen die leichten Flocken abgesetzt. Der Absetzablauf der Belebtschlammbiomasse und der Verschleimung besteht darin, dass ein bestimmtes Verhältnis der Menge der einkommenden Biomasse zur Anzahl der Absetzstufen gewählt wird. Je mehr Biomasse, desto mehr Stufen für ihr Absetzen. Die Anzahl der Stufen muss allerdings mindestens zwei betragen, weil in der ersten Stufe die Abscheidung von Schwebstoffen von bis zu 10 - 15 mg/l in Reinwasser erreicht wird. In der zweiten Stufe ist die Abscheidung von Schwebstoffen bis zu 2 - 4 mg/l sichergestellt. Das Klärwasser wird dann zur Entgiftung weitergeleitet, und das im Abscheiderboden abgesetzte Schlammgemisch wird in das erste Belüftungsbecken zur Regenerierung gefördert. Sobald der hohe Regenerierungsgrad (Umfang) erreicht ist, wird ein Teil davon zur weiteren Behandlung und Verwertung in das dritte Belüftungsbecken weitergeleitet, um ein Nutzprodukt zu bekommen.

Die Regeneration des angeschwollenen Schlammes erfolgt während der Rezirkulation bei maximaler Luftsauerstoffsättigung und während der Behandlung nach dem Kavitationsverfahren mit niedrigem Intensitätsgrad. Im Laufe der Regeneration gewinnt der angeschwollene Schlamm seine Arbeitsaktivität zurück.

Bei der Behandlung von überschüssigem Schlamm, welcher für die Verwertung bestimmt ist, wird die mehrfache rezirkulationsgestützte Belüftungs- und Kavitationsbehandlung von Schlamm vorgenommen. Dabei erfolgt die Kavitationsbehandlung mit niedrigem und hohem Intensitätsgrad zur Schlammentgiftung abwechselnd. Während dieser Kavitationsbehandlung werden die Umhüllungen der Mikroorganismen zerstört. Dabei werden ihre Fermente abgegeben, welche zur intensiven Anreicherung mit biologisch aktiven Stoffen beitragen. Die biologisch aktiven Stoffe unterstützen die Funktion der lebenden Mikroflora des laufenden Stabilisierungsreaktors. Diese Nutzstoffe werden zusammen mit Faulraumwasser zur Anfangsstufe der Behandlung des zu reinigenden Wassers gefördert.

Sobald der Vorgang der Niederschlagbehandlung abgeschlossen ist, wird die Zirkulation beendet, um den Niederschlag zu verdichten und das Faulraumwasser (überschlammwasser) abzuscheiden.

Die Abwasserzuführung in jedes der dafür vorgesehenen Belüftungsbecken wird für die erforderliche Zeitdauer der Behandlung des zu regenerierenden angeschwollenen Schlammes und des zu verwertenden Schlammteils gesperrt.

Das Schlammgemisch der aufgefangenen organischen Verunreinigungen, des überschüssigen Schlammes und der Verschleimung mit Feuchtigkeit von 98 % in der Menge von 1200 m³ wird im Laufe von 6 Stunden verarbeitet. Der Abschluss dieses Vorgangs wird durch die Minimalgröße der Dehydrogenaseaktivität (DAI) gekennzeichnet. Das Schlammgemisch ist mit Luft sehr stark gesättigt. Deswegen schwimmt es auf und wird verdichtet, so dass der Gemischumfang um das dreifache reduziert wird. Die Feuchtigkeit nimmt auch von 98 % bis 94 % ab. Da das Schlammwasser ein großes spezifisches Gewicht aufweist, lässt es sich Ober die untersten Ablässe gut abscheiden. Es fließt zur Anfangsstufe der Reinigung des verschmutzten Wassers zurück. Und das verdichtete behandelte Schlammgemisch in der Menge von 260 m³ kommt zu den weiteren Entwässerungsstufen (Zentrifugieren, Press-Filtern).

### Beispiel 1

Das von groben mechanischen Verunreinigungen befreite Abwasser wird in den Sammelbehälter der Pumpenstation in der Menge von 1000 m³ mit folgendem Verunreinigungsgrad gefördert:

### BSB₂₀ 314 mg/l, CSB 562 mg/l, Schwebstoffe 286 mg/l (Tabelle 1).

Danach werden die Abwässer mittels Pumpen in die Vorreinigungsstufe gefördert. Hier wird das Wasser nach dem Kavitationsverfahren mit niedrigem Intensitätsgrad mit der Kavitationszahl G = 0,004 behandelt. Die Phase der Grundreinigung erfolgt konsequent in drei Stufen, und zwar in getrennten Belüftungsbecken. Hier kommen die Sorption und die Oxidation in der Biozönose des Belebtschlammes sowie in der Verschleimung zustande, welche an den Netzträgern befestigt wird.

Jede der Reinigungsstufen zeichnet sich durch die eingesetzte Biozönose des Belebtschlammes und durch den Schleim aus, welcher an den Netzträgern befestigt wird.

Die erste Stufe der biologischen Reinigung, die im ersten Belüftungsbecken erfolgt, wird durch den folgenden Artenbestand der Mikroorganismengruppen gekennzeichnet: Achromobacter, Alcaligenes, Gordonia, Microtrix, Fusdarium, Aquaeductum, Bodo globosus. In der zweiten Stufe werden sie im Belüftungsbecken durch die folgenden Gruppen von Mikroorganismen ergänzt: Sphaerotilus natans, Beggiatoa alba, Acinetobacter, Vorticella convallaria, Zoogloeo ramigera, Opercularia, Flavobacterium, Carchesium, Rotifera, Micrococcus, Bodo edax. Im dritten Belüftungsbecken kommen zu den vorherigen Mikroorganismen die neuen Gruppen von Mikroorganismen hinzu: Nitrobabacter, Geotrichum, Thiotrix, Pseudomanas, Nematosporangium, Epistylis, Philodina, Monostila, Nitrosomonas, Vorticella microstoma usw.

Die Vermischung des Belebtschlammes mit dem zu reinigenden Wasser erfolgt in jedem der Belüftungsbecken konsequent in Auf- und Abströmung. Der Wasser-Schlammstrom umströmt zuerst den Außenbereich des Belüftungsbeckens (seinen aufsteigenden Ast), dann fließt er über den Mittenteil des Belüftungsbeckens (absteigender Ast) hinunter und passiert den Schleim, welcher an den Netzträgern befestigt ist.

Im Laufe der Behandlung läuft das Wasser in jedem Belüftungsbecken zweimal um. Dabei nimmt der Sauerstoffsättigungsgrad des Wasser-Schlammgemisches anwachsend zu (siehe Tabelle 1), das macht 19, 20,5 und 21,5 mg/l.

Danach kommt das Gemisch von Abwasser und angeschwollenem Schlamm in die Abscheider. Hier erfolgen die Abscheidung des Reinwassers und das Auffangen des angeschwollenen Schlammes, sowie die Nachreinigung mittels Ausflockung unter Einsatz von biologisch aktivem Schleim und Schwerkraftabscheidung. Dabei sinkt der Luftsauerstoffsättigungsgrad des Wasser-Schlammgemischs im ersten Abscheider bis auf 15,9 mg/l, und im zweiten Abscheider bis auf 13,9 mg/l. Nach dem ersten Abscheider beträgt die Menge der Schwebstoffe im zu reinigenden Wasser 15 - 16 mg/l. Die zweite Stufe stellt den Schwebstoffgehalt im zu reinigenden Wasser von 2,8 mg/l sicher. Das Reinwasser wird mit der Verunreinigungskonzentration nach BSB₂₀ - 3,2 und nach CSB - 26 mg/l aus der Vorrichtung abgeführt. Das im unteren Teil der Abscheider abgesetzte Schlammgemisch wird aufgeteilt. 10 - 15 % davon werden ununterbrochen zur Regenerierung dem ersten Belüftungsbecken zugeführt. Der Rest kommt zur Behandlung des zu verwertenden Niederschlages in das dritte Belüftungsbecken. Der Reinigungsgrad von Abwasser entspricht den Grundkennziffern: BSB, CSB, Schwebstoffe.

Die Regeneration des angeschwollenen Schlammes erfolgt im ersten Belüftungsbecken während der zweifachen Rezirkulation bei einer Luftsauerstoffsättigung bis zur Konzentration von 20,5 mg/l und während der Behandlung nach dem Kavitationsverfahren mit niedrigem Intensitätsgrad mit der Kavitationszahl G = 0,002. Während der Regeneration gewinnt der angeschwollene Schlamm seine Arbeitsaktivität zurück.

Bei der Behandlung des überschüssigen Schlammanteils, welcher für die Verwertung bestimmt ist, wird eine dreifache Rezirkulation unter Belüftung bis zu einem Luftsauerstoffsättigungsgrad von ca. 18,5 mg/l vorgenommen. Die Kavitationsbehandlung mit niedrigem (bei Kavitationszahl G = 0,001) und hohem (Kavitationszahl G = 6,5) Intensitätsgrad wird mit Schlammentgiftung abgewechselt. Das Schlammgemisch in einer Menge von 1200 m³ und mit einer Feuchtigkeit von 98 % wird innerhalb von 6 Stunden im dritten Belüftungsbecken verarbeitet. Der Vorgang dauert, bis die minimale Größe für die Dehydrogenaseaktivkät im Schlammgemisch erreicht ist. Nach dem Absetzen innerhalb von 4 Stunden schwimmt das Schlammgemisch auf und wird verdichtet. Dadurch nimmt der Umfang des Gemisches um das dreifache ab, und die Feuchtigkeit fällt von 98 % auf 94 %. Das Schlammwasser lässt sich gut abscheiden und fließt zur Anfangsstufe der Abwasserklärung zurück. Das verdichtete und behandelte Schlammgemisch in der Menge von 260 m³ kommt in die weiteren Entwässerungsstufen (Zentrifugieren). Der behandelte Niederschlag enthält keine pathogene Mikroflora, hat keinen unangenehmen Geruch und stellt ein Krümelgefüge dar. Der Gehalt an organischen Stoffen beträgt 61 %. Der Anteil der Schwermetallsalze liegt in einem ungefährlichen gebundenen natürlichen Zustand in Form von Komplexonen vor.

Beispiele 1 bis 3 für die Ausführung des Verfahrens sind in den Tabellen 1 und 2 angeführt. Die Tabelle 1 beschreibt den Vorgang der Wasserreinigung in den Belüftungsbecken und den Abscheidern. Die Tabelle 2 dient als Fortsetzung der Tabelle 1, wobei die Ablaufparameter angegeben sind, welche mit der Regeneration des angeschwollenen Schlammes und mit der Verwertung des aufgefangenen Niederschlages zusammenhängen.

Das Verfahren ermöglicht es, den Wasserreinigungsgrad zu erhöhen und den Sicherheitsgrad der abgeschiedenen Verunreinigungen zu verbessern, so dass der abgeschiedene Schlamm als Nutzprodukt eingesetzt werden kann. Das Verfahren ermöglicht es auch, die Kosten für das Reinwasser und die Niederschlagverwertung zu senken.

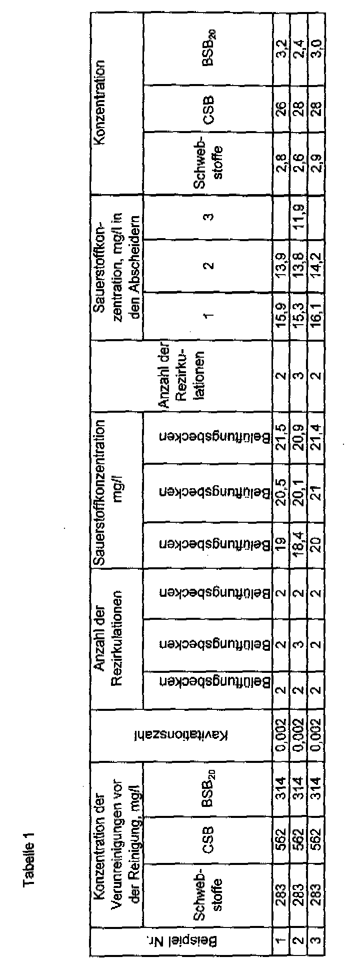

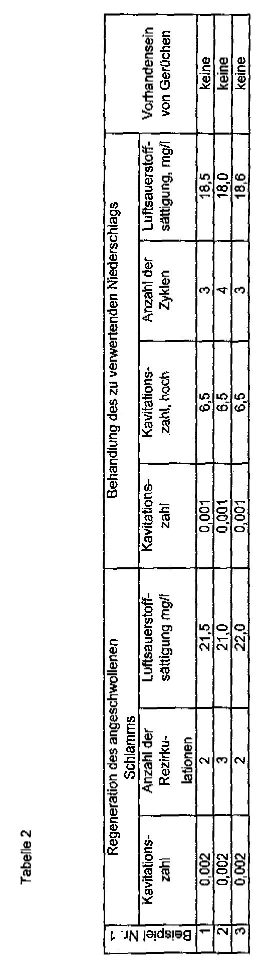

## Patentansprüche

1. Verfahren zur biologischen Abwasserklärung und Schlammverwertung, das folgende Schritte aufweist:
eine Sorption und Oxidation von Abwasser in Biozönose des Belebtschlammes, eine Abwasserbelüftung und -behandlung mittels Kavitationsverfahrens mit niedrigem Intensitätsgrad, eine Abscheidung von gereinigtem Wasser, ein Auffangen von angeschwollenem Schlamm, eine Wassernachreinigung mittels Ausflockung anhand von Verschleimung und Schwerkraftabscheidung, eine Rückführung von angeschwollenem Schlamm zur primären Belüftungsphase und eine Entnahme und Entfernung des abgenutzten Niederschlages, wobei die Belüftung mindestens zweimal durchgeführt wird, bis ein Luftsauerstoffsättigungsgrad von mindestens 15 - 20 mg/l erreicht ist und wobei das Auffangen von angeschwollenem Schlamm und die Verschleimung in einem Abscheider mit festgelegter Beladung erfolgt, welche die Verschleimung einschließt,
**dadurch gekennzeichnet,**
**dass** die Sorption und die Oxidation der Abwässer in der Biozönose des Belebtschlammes mit dem Sorptions- und Oxidationsvorgang anhand der Verschleimung bei einem Luftsauerstoffsättigungsgrad von mindestens 18 - 22 mg/l vereinigt werden,
**dass** dieser Vorgang konsequent in drei Stufen durchgeführt wird, wobei drei getrennte Belüftungsbecken eingesetzt werden und die Belüftungsbecken sich durch die eingesetzte Biozönose des Belebtschlammes und der Verschleimung unterscheiden,
**dass** dabei die Vermischung des Belebtschlammes mit dem zu klärenden Abwasser in jedem Belüftungsbecken mindestens zweimal in der Auf- und Abströmung vorgenommen wird,
**dass** die Auf- und Abströmung im Belüftungsbecken mittels Verwirbelung des Wasser-Luftgemisches erzeugt wird,
**dass** das Wasser-Luftgemisch bei der Behandlung nach dem Kavitationsverfahren mit niedrigem Intensitätsgrad und bei der in jeder Ablaufsphase vorgenommenen Belüftung erzeugt wird,
**dass** die Nachreinigung, die Abscheidung von gereinigtem Wasser und das Auffangen von angeschwollenem Schlamm und Schleimteilchen konsequent in zwei bis drei Schritten vorgenommen wird, wobei der aufgefangene Niederschlag aus dem angeschwollenen Schlamm und den Schleimteilchen besteht,
**dass** der Niederschlag aufgeteilt wird, wobei jedes der Teile in eines der Belüftungsbecken gefördert wird, wo vorher die Wasserreinigung durchgeführt wurde,
**dass** ein Teil für die Regenerierung von Schlamm verwendet wird,
**dass** der Rest für die Behandlung des Schlammes eingesetzt wird,
**dass** bei der Behandlung von dem zu verwertenden Niederschlag seine Verwertung mit der Behandlung nach dem Kavitationsverfahren mit hohem und mit niedrigem Intensitätsgrad in mindestens zwei Zyklen vorgenommen wird,
**dass** die Abwasserzuführung in jedes der Belüftungsbecken, welche zur Regeneration von angeschwollenem Schlamm oder zur Niederschlagbehandlung eingesetzt werden, dabei für die für solche Vorgänge erforderliche Zeitdauer gesperrt wird,
**dass** während dieser Vorgänge eine mehrfache zirkulationsgestützte Belüftungs- und Kavitationsbehandlung vorgenommen wird,
**dass** der Schlamm danach im Absetzvorgang verdichtet wird und
**dass** das im Niederschlagbehandlungsvorgang enzymangereicherte Faulraumwasser (Überschlammwasser) in die Primärstufe des Wasserklärungsvorgangs zurückgeführt wird.
